# EUROPEAN PATENT APPLICATION

(11) **EP 0 937 744 A1**
(43) Date of publication of application: **25.08.1999**
(21) Application number: 99102697.2
(22) Date of filing: 12.02.1999
(51) Int. Cl.: C08K 7/06, C08L 83/04, C08J 5/18

(54) **Silicone rubber composite**

(30) Priority: 18.02.1998 JP 5281198
(71) Applicant: NIPPON OIL CO. LTD., Minato-ku Tokyo (JP)
(72) Inventor: Uchida, Daisuke c/o Nippon Oil Co., Ltd., Tokyo (JP); Sohda, Yoshio c/o Nippon Oil Co., Ltd., Naka-ku, Yokohama-shi, Kanagawa (JP); Sanokawa, Yutaka c/o Nippon Oil Co., Ltd., Tokyo (JP); Kude, Yukinori c/o Nippon Oil Co., Ltd., Naka-ku, Yokohama-shi, Kanagawa (JP)
(74) Representative: WILHELMS, KILIAN & PARTNER Patentanwälte

(57) **Abstract**

A high heat-conductivity silicone rubber composition containing a silicone rubber substrate and continuous, high heat-conductivity fibers, which has excellent tackiness and adhesiveness as well as high heat conductivity and radiativity, and which may also have high heat conductivity and radiativity in a specific direction.

## Description

### BACKGROUND OF THE INVENTION

### 1. Field of the Invention

This invention relates to a high heat-conductivity silicone rubber composition which has excellent tackiness or adhesiveness as well as high heat conductivity and which is favorable for use as heat-radiative sheets for electronic parts that may cause heat buildup, and also to a silicone rubber composite having high heat conductivity and radiativity. In particular, it relates to a silicone rubber composite for heat conduction, which reduces the contact resistance between electronic parts and heat-radiative plates and which is suitable for efficient radiation or conduction of heat in a specific direction, a process for producing the same, and a heat-conductive device.

### 2. Description of the Prior Art

With the recent tendency toward small-sized, high-performance portable information appliances, especially notebook-type personal computers, the quantity of heat to be generated by CPU (central processing unit) in those appliances is increasing, and the most important problem in the art is how to release the heat to the outside, that is, the measures to be taken for heat radiation.

Heretofore, for example, heat-radiative plates of aluminium or the like that are connected with heat pipes have been widely used as the measures to be taken for heat radiation from such CPU. The heat-radiative plate must be fixed on CPU, for which generally employed is the technique of screwing up the plate.

In that case, however, the contact interface between CPU and the heat-radiative plate inevitably generates heat resistance, resulting in that the heat-radiative plate could not exhibit the capabilities intrinsic thereto and their heat radiativity lowers. In addition, if the heat resistance is too large, the diffusion of heat as radiated by CPU is too great, thereby having some negative influences on the peripheral parts.

Therefore, it is important to reduce the contact resistance between CPU and the heat-radiative plate and to efficiently conduct heat to the plate.

As means for reducing the contact heat resistance, there has been proposed a heat-radiative silicone rubber sheet comprising an adhesive silicone rubber substrate and an additive, such as a metal powder, a ceramic powder of aluminum oxide, boron nitride, aluminum nitride or the like, or a carbon powder of natural graphite, carbon black or the like added thereto for increasing the heat conductivity of the substrate in, for example, Japanese Patent Laid-open Gazette Nos. 155517/1994, 266356/1995 and 238707/1996.

However, since the silicone rubber sheet of that type is finally influenced-on the heat conductivity to a great extent by the frequency of contact of the additive grains of a filler or the like in the sheet, the sheet is still problematic in that it could not sufficiently exhibit the high heat conductivity intrinsic to the additive and that its heat-radiating capabilities are unsatisfactory even though its contact heat resistance could be reduced. On the other hand, if the content of the additive is enlarged so as to increase the frequency of contact of the additive grains, too much additive will cause other problems that the substrate is difficult to cure and the tackiness of the final rubber sheet is low. In addition, since the heat-radiative silicone rubber sheet of that type is of an isotropic material, its heat conductivity is nearly the same in both the in-plane direction and the out-of-plane direction. Through the sheet, therefore, selective heat radiation in a specific direction is impossible.

Japanese Patent Laid-open Gazette No. 207160/1995 discloses a process for producing a silicone composition having excellent heat conductivity and electric conductivity, which comprises kneading a silicone polymer substrate with a fine powdery filler referred to as a thickener and a metal or an alloy and adding thereto a carbon material such as carbon fiber.

In this process, however, the carbon material is a component only for improving or stabilizing the electroconductivity of the silicone composition and is not disclosed as a component for improving the heat conductivity of the composition. In addition, no method is disclosed of using carbon fiber for imparting excellent heat conductivity to the silicone composition in a specific direction.

### 3. Objects of the Invention

An object of this invention is to solve the problems in the prior art noted above and to provide a high heat-conductivity silicone rubber composition which has excellent heat conductivity and radiativity and has good tackiness and adhesiveness.

Another object of this invention is to provide a silicone rubber composite and a silicone rubber sheet for heat conduction, which have excellent heat conductivity and radiativity, especially high heat conductivity and radiativity in a specific direction, and have good tackiness and adhesiveness, a process for producing the same, and a heat-conductive device.

### SUMMARY OF THE INVENTION

To attain the objects noted above, the high heat-conductivity silicone rubber composition of this invention is featured in comprising a silicone rubber substrate and carbon fibers (carbon fibers A) having a length of from 0.005 to 100mm added to the substrate.

The silicone rubber composite of this invention is prepared by adding high heat-conductivity fibers having a heat conductivity of from 60 to 1200 W/m·K to a silicone rubber substrate in an amount of from 1 to 70 % in terms of the fiber volume content, and is featured in that at least a part of the high heat-conductivity fibers therein are oriented in one direction or in a two-dimensional direction.

Where the silicone rubber composite for heat conduction of this invention is used as a silicone rubber sheet, the sheet of the composite is featured in that at least a part of the high heat-conductivity fibers therein are so oriented as to constitute an out-of-plane directional component relative to the sheet whereby at least a part of the high heat-conductivity fibers will pass through the sheet. In this case, the high heat-conductivity fibers as incorporated in the silicone rubber substrate are oriented in the out-of-plane direction and/or in-plane direction of the sheet.

The process for producing the silicone rubber composite for heat conduction of this invention comprises adding high heat-conductivity fibers having a length of from 0.1 to 100 mm to a silicone rubber substrate, then orienting the high heat-conductivity fibers in one direction, and curing the silicone rubber substrate; or comprises laminating or depositing at least one type of high heat-conductivity fibers selected from the group consisting of fiber tows, fiber fabrics, unidirectional fiber materials and chopped fibers in a container, then infiltrating a silicone rubber substrate thereinto, and curing the substrate.

For sheeting it, the silicone rubber composite for heat conduction, which is prepared in any of the processes mentioned above, is cut in the direction substantially vertical to the direction of orientation of the high heat-conductivity fibers therein, thus forming sheets.

The heat-conductive device of this invention comprises a heat-generative unit and a heat-radiative unit connected with each other via the above-mentioned, high heat-conductivity silicone rubber composition or silicone rubber composite for heat conduction.

In the device where the heat-generative unit and the heat-radiative unit are connected with each other via a sheet of the silicone rubber composite for heat conduction and where at least a part of the high heat-conductivity fibers in the sheet are so oriented as to constitute an out-of-plane directional component, the heat-generative unit is connected with one surface of the sheet and the heat-radiative unit with the other surface thereof.

### THE DRAWINGS

Fig. 1 is a view of one embodiment of the high heat-conductivity silicone rubber composition of this invention used as a heat-generative sheet.
Fig. 2 is a view of one embodiment of the method for shaping the silicone rubber composite of this invention.

### DETAILED DESCRIPTION OF THE PREFERRED EMBODIMENTS

The silicone rubber substrate for use in this invention is not specifically defined, but any known ones are employable herein. Especially preferred are those having, before cured, a viscosity at room temperature (25°C) of generally from 0.01 to 100,000 Pa·s, preferably from 0.1 to 300 Pa·s, more preferably from 0.3 to 100 Pa·s, most preferably from 0.5 to 30 Pa·s.

The others having a viscosity of smaller than 0.01 Pa·s or larger than 100,000 Pa·s are unfavorable, since the oil separation in the silicone rubber composition comprising the former is great, while the viscosity of the latter is too large and the workability thereof is poor.

To make it have a suitable viscosity for good workability, the silicone rubber substrate for use in this invention may be diluted with or dissolved or dispersed in an aromatic or aliphatic solvent.

Any types of one-pack or two-pack curing silicone rubber substrates are usable herein, though preferred are two-pack curing ones.

In this invention, preferably used are silicone rubber substrates containing, as the main component, an organopolysiloxane represented by a mean compositional formula RₐSiO_{(4-1)/2}. In the mean compositional formula, it is desirable that R represents a substituted or unsubstituted monovalent hydrocarbon residue having from 1 to 10 carbon atoms (for example, selected from the group consisting of alkyl groups such as methyl, ethyl, propyl, butyl, 2-ethylbutyl and octyl groups; alkenyl groups such as vinyl, allyl and hexenyl groups; cycloalkyl groups such as cyclohexyl and cyclopentyl groups; aryl groups such as phenyl and tolyl groups; and aralkyl groups such as phenylethyl group, wherein the hydrogen atoms in these groups may be partly or entirely substituted with any of halogen atoms, cyano group, etc.), and "a" represents a positive number of from 1.85 to 2.10.

It is desirable that the organopolysiloxane has a mean degree of polymerization falling between 100 and 20,000. More desirably, the degree falls between 300 and 2,000 for liquid-type ones, and falls between 6,000 and 12,000 for rubber-type ones.

Organopolysiloxanes having a mean degree of polymerization of smaller than 100 are unfavorable, since the silicone rubber substrate comprising them has, after cured, low mechanical strength.

Although the silicone rubber substrate for use in this invention may not contain any inorganic filler, it may contain an ordinary inorganic filler.

The inorganic filler are generally metal oxides, boron nitride, etc., specifically aluminum oxide, magnesium oxide, silicon dioxide, beryllium oxide, cubic boron nitride, hexagonal boron nitride, silicon carbide, silicon nitride, copper powder, aluminum powder, etc. One or more of these inorganic filler may be incorporated into the substrate either singly or as combined. Although the amount of the heat-conductive inorganic filler to be contained in the silicone rubber substrate varies depending on the type of the filler when the silicone rubber substrate contain the filler, it may be generally from 10 to 1000 parts by weight, preferably from 100 to 1000 parts by weight, relative to 100 parts by weight of the substrate.

The silicone rubber substrate may contain, as a flame retardant, any of metal compounds such as aluminum hydroxide, iron oxide, titanium oxide, magnesium oxide and the like; and platinum compounds such as platinum black, chloroplatinic acid, complexes of chloroplatinic acid with olefins, vinylsiloxanes, acetylene alcohol, etc., and alcohol-modified chloroplatinic acid. Regarding its amount, the flame retardant of metal compounds such as aluminum hydroxide may be in the silicone rubber substrate generally in an amount of from 5 to 200 parts by weight relative to 100 parts by weight of the substrate, while that of platinum compound generally in an amount of from 3 to 500 ppm, in terms of platinum, relative to 100 parts by weight of the substrate.

The silicone rubber substrate may contain, as a thickener, any of silica gel, carbon black, calcium carbonate, quartz powder, diatomaceous earth, iron oxide, ferrite, zinc flower, clay minerals, mica, smectite, lithium soap, aluminum soap, etc. Adding the thickener to a low-viscosity silicone rubber substrate makes the substrate greasy, and the greasy substrate effectively ensures the direction of orientation of the high heat-conductivity fibers added thereto.

The amount of the thickener to be added may be generally from 1 to 1000 parts by weight relative to 100 parts by weight of the silicone rubber substrate.

To cure the silicone rubber substrate, any of room temperature curing or heat curing type is employable, depending on the temperature condition for curing. The curing method includes peroxide curing, addition curing, ultraviolet curing, electron beam curing, etc., and any of these may be employed herein.

The silicone rubber substrate may contain any known additives, such as reinforcing agents, dispersants, heat resistance improvers, electroconductive agents, pigments, etc.

The high heat-conductivity fibers are added to the silicone rubber substrate in this invention for increasing the heat conductivity of the substrate, and they generally include silicon carbide fibers, pitch-base carbon fibers, polyacrylonitrile-base carbon fibers and rayon-base carbon fibers, and also their precursors.

The pitch-base precursor fibers include spun fibers, and infusible fibers and precarbonized fibers derived from them.

The carbon fibers for use in this invention include, in addition to the precursor fibers noted above, carbonized or graphitized fibers derived from them. The temperature at which the fibers are processed varies depending on the process employed. In general, the fibers may be processed in an oxidizing atmosphere at a temperature of from 200 to 450°C for flame retardation or infusibilization, or in a non-oxidizing atmosphere at a temperature of from 400 to 1000°C for precarbonization, or in a non-oxidizing atmosphere at a temperature of from 1000 to 1500°C for carbonization, or in a non-oxidizing atmosphere at a temperature of from 2000 to 3000°C for graphitization.

The high heat-conductivity fibers for use in this invention generally have a heat conductivity of from 5 to 1200 W/m·K, preferably from 60 to 1200 W/m·K, more preferably from 100 to 1200 W/m·K, even more preferably from 150 to 1200 W/m·K, most preferably from 300 to 1200 W/m·K. For the silicone rubber composite of this invention, employable are the high heat-conductivity fibers of any types noted above, but preferred are pitch-base carbon fibers capable of easily exhibiting high heat conductivity.

As the pitch-base carbon fibers for use in this invention, preferred are graphitized fibers that are prepared through graphitization in a non-oxidizing atmosphere at a temperature of generally from 2000 to 3300°C, preferably from 2300 to 3300°C.

One economical and inexpensive method for obtaining carbon fibers having high heat conductivity comprises preparing pitch-base carbon fibers through heat treatment at a temperature of from 1500 to 2500°C, then chopping them into a length of 0.1 to 100mm or so or not chopping them, and then further heating the fibers at a temperature of from 2500 to 3300°C. After having been spun, infusiblized or graphitized, the fibers may be chopped or may not be chopped.

The fibers chopped during spinning or spun to be short may be infusiblized, carbonized or graphitized, before they are used in this invention. Also usable herein are carbon fiber whiskers having a suitable length and prepared through vapor phase growth of the fibers noted above.

In order to make the high heat-conductivity silicone rubber composite of this invention anisotropiccally heat-conductive, it is preferable to use continuous, high heat-conductivity fibers.

The continuous, high heat-conductivity fibers refer to those used after having been cut if desired although they may be used without being cut. They shall have a length of generally from 0.1 to 10,000 times, preferably from 2 to 10,000 times, more preferably from 2 to 1,000 times the thickness of the silicone rubber sheet such as a heat-radiative sheet to be finally formed from the high heat-conductivity silicone rubber composition of this invention.

The continuous, high heat-conductivity fibers for use in this invention especially preferred are continuous carbon fibers.

In this invention, the mode of reinforcing the silicone rubber composite with the continuous, high heat-conductivity fibers noted above is not particularly limited. For example, it includes one-directional orientation, for which a tow of the high heat-conductivity fibers is directly aligned in one direction, or the high heat-conductivity fibers are aligned in one direction by using a unidirectional material thereof, or the high heat-conductivity fibers are dispersed in a rubber substrate and oriented in one direction through shearing; two-dimensional orientation for which are used fabrics of the high heat-conductivity fibers; random orientation for which the high heat-conductivity fibers are, after having been chopped, aligned at random; two-dimensional random orientation for which the chopped, high heat-conductivity fibers are deposited at random; and combinations of any of these.

The high heat-conductivity fibers, if short, may be mixed and dispersed in a silicone rubber substrate. In this case, the fibers shall have a length of generally from 0.005 to 100 mm, preferably from 0.1 to 100 mm, more preferably from 0.5 to 50 mm, even more preferably from 1 to 10 mm.

For the high heat-conductivity fibers for use in this invention, short carbon fibers of which the length falls within the defined range may be prepared by spinning precursor fibers into short fibers, or by cutting continuous long fibers into short fibers having the intended length. To shorten the fibers, any desired method is employable, comprising, for example, cutting or grinding them.

Short, high heat-conductivity fibers of which the length is below the defined range are unfavorable, since they could not exhibit the heat-conductive characteristic intrinsic to the high heat-conductivity fibers. On the other hand, long, high heat-conductivity fibers of which the length is above the defined range are also unfavorable, since their dispersibility in rubber substrates is poor and any silicone rubber composites having uniform heat conductivity could not be obtained.

The high heat-conductivity fibers may be incorporated into a silicone rubber substrate by themselves. If desired, different types of high heat-conductivity fibers having different lengths may be combined and incorporated into the substrate to produce a silicone rubber composition.

The carbon fibers to be used in the high heat-conductivity silicone rubber composition of this invention may be composed of two components of carbon fibers A and carbon fibers B, in which the carbon fibers A are the essential component and will be described in detail hereinunder.

The carbon fibers A are the main component of the heat-conductive filler in the silicone rubber composition, and their length is generally from 0.005 to 100mm, preferably from 0.1 to 100mm.

Spinning the precursor fibers into short fibers, or cutting or grinding the spun continuous carbon fibers gives the carbon fibers A of which the length falls within the defined range.

Carbon fibers A of which the length is below the defined range are unfavorable, since the carbon fibers could not be well contacted with each other in the silicone rubber substrate and therefore could not exhibit the effect of the heat-conductive filler. On the other hand, carbon fibers of which the length is above the defined range are also unfavorable, since their dispersibility in the silicone rubber substrate is poor.

Carbon fibers A of which the length falls within the defined range may be shortened into the length of generally from 10 to 1500 µm, preferably from 10 to 700 µm, more preferably from 30 to 300 µm, even more preferably from 50 to 200 µm by kneading the silicone rubber substrate after adding the carbon fibers.

The amount of the carbon fibers A to be added to the silicone rubber substrate may be generally from 1 to 300 % by weight, preferably from 5 to 150 % by weight, more preferably from 5 to 20 % by weight of the substrate.

Adding the carbon fibers A in an amount below the defined range to the silicone rubber substrate is unfavorable, since the frequency of contact of the carbon fibers in the substrate is small and the resulting rubber composition could not have the intended heat conductivity. On the other hand, adding the carbon fibers A in an amount above the defined range thereto is also unfavorable, since the viscosity of the silicone rubber substrate increases too much and the substrate and the carbon fibers will be difficult to stir and mix. In addition, the substrate will be difficult to cure, or the uniformity and even the tackiness of the resulting silicone rubber composition will lower.

The carbon fibers A for use herein must have a heat conductivity of generally from 100 to 1200 W/m·K, preferably from 150 to 1200 W/m·K, more preferably from 300 to 1200 W/m·K.

As the carbon fibers A, preferred are the above-mentioned pitch-base carbon fibers that readily exhibits high heat conductivity.

The carbon fibers B are so used herein that they are entangled with the carbon fibers A in a complicated manner to thereby ensure or enhance the contact of the carbon fibers A with each other. The length of the carbon fibers B is generally from 1 to 20 mm, preferably from 2 to 10 mm, more preferably from 3 to 5 mm.

Spinning precursor fibers into short fibers, or cutting or grinding spun continuous carbon fibers gives the carbon fibers B of which the length falls within the defined range.

Carbon fibers B of which the length is below the defined range are unfavorable, since their frequency or points of contact with the carbon fibers A will decrease. On the other hand, carbon fibers of which the length is above the defined range are also unfavorable, since their dispersibility in the silicone rubber substrate will lower. If so, the carbon fibers B will rather be entangled with each other, than with the carbon fibers A, and, as a result, they could not attain the object intrinsic to them.

The amount of the carbon fibers B to be added to the silicone rubber substrate may be generally from 0.1 to 10 % by weight, preferably from 0.5 to 5 % by weight, more preferably from 1 to 3 % by weight of the substrate.

Adding the carbon fibers B in an amount below the defined range to the silicone rubber substrate is unfavorable, since they could not be well contacted with the carbon fibers A, resulting in that the carbon fibers A could not satisfactorily exhibit their high heat conductivity. If so, the resulting silicone rubber composition could not have the desired heat conductivity. On the other hand, ridding the carbon fibers B in an amount above the defined range thereto is also unfavorable, since the silicone rubber substrate will form blocks to lose its fluidity, when stirred and mixed with the fibers. If so, the mixture is difficult to cast into a filling container and its handlability is lowered. Though not particularly limited, the carbon fibers B is preferably curly.

The curly carbon fibers may be any ones, excluding linear carbon fibers, and the extent of their curliness is not particularly limited. However, preferred are those having a radius of curvature falling between 1 and 10000 mm.

The curly carbon fibers can be prepared, for example, by winding precarbonized carbon fibers around a bobbin having an outer diameter of from 0.5 to 100 cm or laminating them in circles or curves in a can, and then carbonizing or graphitizing them to make them have a curly burnt form.

The carbon fibers B for use in this invention have a heat conductivity of generally from 5 to 1200 W/m·K, preferably from 10 to 100 W/m·K.

In this invention, the high heat-conductivity silicone rubber composition or the silicone rubber composite for heat conduction may be shaped into silicone rubber sheets that are favorable for use as heat-radiative sheets. The thickness of the final sheets falls generally between 0.05 and 10 mm, preferably between 0.1 and 10 mm, more preferably between 0.1 and 5 mm, most preferably between 0.2 and 3 mm. Silicone rubber sheets having a thickness below the defined range will be low in the strength; and those having a thickness above the same, will be low in the ability to transfer heat to heat-radiative units if the high heat-conductivity fibers therein are short fibers. The silicone rubber sheet may be pressed, when used in contact with a heat-radiative unit or a heat-generative unit, so as to reduce the contact resistance.

Where the silicone rubber sheet is formed from the high heat-conductivity silicone rubber composition of this invention, a predetermined amount of the high heat-conductivity silicone rubber composition is filled in a shaping container to have a predetermined thickness and cured therein to give the sheet. Alternatively, the silicone rubber composition may be shaped in blocks and then sheets having a desired thickness may be cut out of each block. The intended silicone rubber sheets can be obtained by any of these methods, but, in general, the former method is preferred.

A heat-generative unit and a heat-radiative unit can be connected with each other via the silicone rubber composition or the silicone rubber sheet obtained in this invention to construct a heat-conductive device.

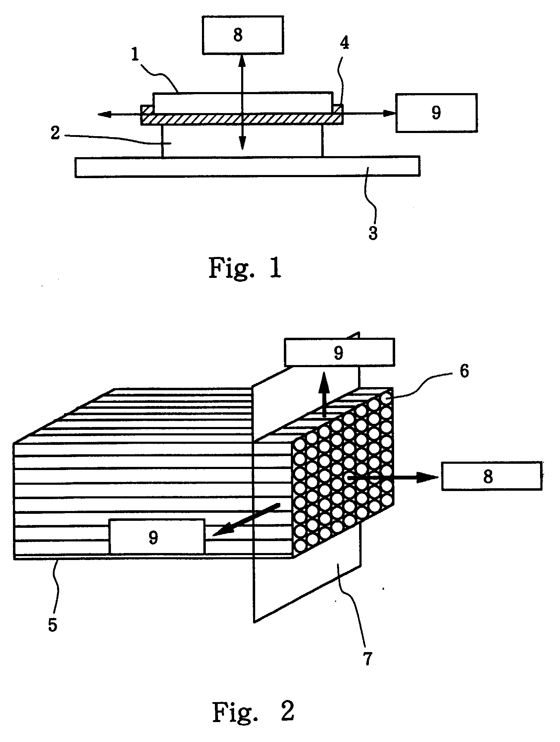

As one concrete example, Fig. 1 shows one embodiment of this invention in which the high heat-conductivity silicone rubber composition of this invention is used to form a heat-radiative sheet. In Fig. 1, numeral 1 stands for a heat-radiative plate, numeral 2 for a CPU, numeral 3 for a personal computer box, and numeral 4 for a heat-radiative silicone rubber sheet.

Though not shown in Fig. 1, a plurality of heat-radiative plates and/or a plurality of heat-radiative units such as CPU may be connected with the silicone rubber sheet of this invention; or a plurality of heat-radiative plates may be laminated with the adjacent plates sandwiching the silicone rubber sheet therebetween; or a heat-radiative unit or a heat-generative unit may be connected with a personal computer box via the silicone rubber sheet therebetween.

In this invention, it is more preferred that the heat conductivity of the high heat-conductivity silicone rubber composition is higher.

The heat conductivity of the high heat-conductivity silicone rubber sheet according to this invention falls generally between 0.2 and 10 W/m·K, preferably between 0.6 and 10 W/m·K, more preferably between 1.0 and 10 W/m·K, even more preferably between 1.5 and 10 W/m·K, most preferably between 2 and 5 W/m·K.

The high heat-conductivity silicone rubber composite of this invention is featured in its anisotropic heat conductivity.

The high heat-conductivity fibers have such a characteristic that they have a significantly higher degree of heat conductivity in the direction of the fiber axis than in the other directions, that is, an anisotropy in heat conductivity. Owing to such a characteristic of the fibers, the silicone rubber composite comprising the same can have anisotropic heat conductivity.

The silicone rubber composition containing the high heat-conductivity fibers oriented in a specific direction could have a significantly high degree of heat conductivity in the direction in which the fibers are oriented, but have a relatively low degree of heat conductivity in the other directions in which the fibers are not oriented.

For orienting the high heat-conductivity fibers, employable is any of the above-mentioned methods for one-dimensional orientation, two-dimensional orientation, random orientation, two-dimensional random orientation, etc. The length of the fibers to be used herein could be a specific one, as mentioned hereinabove.

The high heat-conductivity silicone rubber composite of this invention is cut after curing in such a direction as to give silicone rubber sheets, of which the anisotropy of the heat conductivity varies depending on the direction of cutting. Where the sheets are used for heat radiation, it is important that the sheets well conduct heat in the direction of their thickness. Therefore, desirably, the sheets are cut in such a direction that the oriented, high heat-conductivity fibers are cut, more preferably as many such fibers as possible are cut vertically to the fiber axis. Therefore, for example, continuous carbon fibers selected from among carbon fiber tow, carbon fiber fabrics, unidirectional materials of carbon fibers and chopped carbon fibers are laminated or deposited in a container, and then a silicone rubber substrate is infiltrated thereinto and cured to obtain a silicone rubber composite, in which the carbon fibers are oriented in the manner of one-dimensional orientation, vertical two-dimensional orientation, random two-dimensional orientation or their combinations. The resulting composite is cut into sheets in the direction parallel to the direction in which the carbon fibers were laminated or deposited.

The direction in which the carbon fibers were laminated or deposited refers to the direction of the depth of the shaping container where the fibers were laminated or deposited, that is, the direction in which the laminated or deposited fibers are cut. More preferably, in that cutting manner, the fibers are partly or entirely so cut that their direction of orientation is vertical to the cut surfaces of the sheets.

The method for shaping the silicone rubber composite is described concretely with reference to Fig. 2.

Fig. 2 is a view of one embodiment of the method for shaping the silicone rubber composite of this invention, in which numeral 5 stands for a silicone rubber composite, numeral 6 for carbon fibers, numeral 7 for a cutting-out plane, numeral 8 for the out-of-plane direction of a heat-radiative sheet, and numeral 9 for the in-plane direction of the sheet.

The out-of-plane direction and the in-plane direction as referred to herein are as follows. In the case of Fig. 1 where the heat-radiative sheet 4 is one made from a high heat-conductivity silicone rubber composite 5, the out-of-plane direction is indicated by numeral 8 and is substantially vertical to the direction of the plane of the heat-generative unit 2 and/or the heat-radiative plate 1 (heat spreader), while the in-plane direction is indicated by numeral 9 and is substantially parallel to the direction of the plane of the heat-generative unit 2 and/or the heat-radiative plate 1. Though not shown herein, the silicone rubber sheet according to this invention may be connected with a plurality of heat-radiative plates and/or a plurality of heat-generative units such as CPU; or the silicone rubber sheet may be sandwiched between a pair of heat-radiative plates to construct a laminate structure; or a heat-radiative unit and a heat-generative unit may be connected with a personal computer box via the silicone rubber sheet therebetween.

Where the carbon fibers 6 are used in the form of a tow or a unidirectional material, the tow is deposited while being aligned in one direction or the unidirectional material is laminated while being oriented in one direction, and thereafter a silicone rubber substrate is infiltrated thereinto and cured. Thereafter, as in Fig. 2, the product is cut along the plane 7 that is vertical to the direction of orientation of the carbon fibers 6. In that manner, the sheet produced shall have high heat conductivity selectively in the direction of orientation of the carbon fibers 6, that is, vertical to the plane 7 along which the sheet was cut.

In that case where the tow or unidirectional material of carbon fibers is used and the sheet is cut in the manner mentioned above, and where the sheet is set between the heat-generative unit 2 such as CPU and the heat-radiative unit 1 such as a heat spreader, as in Fig. 1, heat from the unit 2 can be rapidly diffused to the unit 1 via the sheet.

Any other sheet cutting methods are also employable herein. When, for example, the silicone rubber composite comprising high heat-conductivity fibers oriented in one direction or in a two-dimensional direction is used to produce a silicone rubber sheet which is cut in the direction parallel to the direction of orientation of the fibers, the sheet receives heat from the heat-generative unit and rapidly diffuses it in the in-plane direction thereof.

Where the high heat-conductivity fibers are fabrics, such as plain fabrics, satin fabrics or twill fabrics of carbon fibers, the fabrics are laminated and then a silicone rubber substrate is infiltrated thereinto and cured, and thereafter the cured substrate is cut in the direction vertical to the direction of lamination and to one direction of orientation of the high heat-conductivity fibers constituting the fabrics. In that manner, the sheet produced will have high heat conductivity selectively in two directions, of which one is the direction of orientation of the fibers, that is, vertical to the plane along which the sheet was cut, and the other is the direction of orientation of the remaining uncut fibers.

In that case where the fabrics are used and the sheet is cut in the manner mentioned above, not only the heat can be rapidly diffused to the heat-radiative unit 1 above the heat-generative unit 2, in Fig. 1, but also, since the sheet contains the high heat-conductivity fibers oriented parallel to the plane along which the sheet was cut, the local heat from the heat-generative unit 2 can be diffused in the direction (direction 9) parallel to the plane along which the sheet was cut. When the sheet is cut vertically to the direction of lamination of the fabrics, it becomes possible to form a heat-radiative sheet having a high heat conductivity in the plane direction and capable of preventing the units from being locally heated.

Where relatively short, high heat-conductivity fibers having a length of from 0.005 to 100 mm, preferably from 0.1 to 100 mm, such as those mentioned hereinabove, are oriented at random or in one direction, the fibers are laminated and dispersed in a silicone rubber substrate in such a manner that their length is generally from 0.1 to 100 times, preferably from 2 to 10 times the thickness of the heat-radiative sheet which is finally cut out, and that they are oriented at random in the two-dimensional direction, thereby to prepare a composite. Then, the prepared composite is sliced along the direction parallel to the direction of lamination of the fibers to obtain a silicone rubber sheet having high heat conductivity in the direction vertical to the plane of the sheet and having anisotropic heat conductivity in the in-plane direction of the sheet. Alternatively, the fibers are mixed and kneaded with a silicone rubber substrate and thereafter sheared so that the fibers are oriented in one direction parallel to the direction of shearing, thereby to prepare a composite. Then, the resulting composite is sliced along the direction vertical to the direction of shearing, thereby to produce a silicone rubber sheet. The silicone rubber sheet thus produced have high heat conductivity in the direction vertical to the plane of the sheet and isotropic heat conductivity in the in-plane direction thereof.

If the silicone rubber composite to be sliced into sheets is so soft that it is difficult to slice, it is cooled to a temperature at which it is easy to slice, and the thus-cooled composite can be sliced with ease. The cooling means usable includes refrigerators, freezers, ice, dry ice, liquid nitrogen, and liquid helium. The slicing method employable includes cutting with plows such as planes or with sawing machines such as circular saws or the like, water-jet cutting, and laser cutting.

In this invention, the fiber content of the high heat-conductivity silicone rubber composite is generally from 1 to 70 %, preferably from 2 to 70 %, more preferably from 2 to 60 %, even more preferably between 2 and 50 % in terms of the fiber volume content.

The fiber volume content below the defined range is unfavorable, since uniform disposition of the fibers in the substrate is difficult. In addition, the resulting composite is not uniform and can not have the intended heat conductivity. On the other hand, the fiber volume content above the defined range is also unfavorable, since the silicone rubber substrate could not well penetrate into the fibers or the fibers could not satisfactorily disperse in the substrate, resulting in that the curability of the substrate and even the shapability and uniformity of the composite are greatly lowered. If so, silicone rubber composites having good adhesiveness and having uniform and good heat conductivity could not be obtained.

The fiber volume content is suitably determined within the range noted above depending on the use and object of the silicone rubber composite. For example, when the silicone rubber composite is required to have high heat conductivity, its fiber volume content must be from 10 to 70 %, preferably from 10 to 50 % by weight, and when required to have good adhesiveness to other members, it must be from 1 to 30 %, preferably from 2 to 30 %, more preferably from 3 to 10 %.

It is more desirable that the high heat-conductivity silicone rubber composite of this invention is more flexible and has higher heat conductivity.

Where relatively short, high heat-conductivity fibers having a length of from 0.005 to 100 mm, preferably from 0.1 to 100 mm, such as those mentioned above are used in this invention, the high heat-conductivity silicone rubber sheets are produced, for example, in the manner mentioned below.

First, a silicone rubber substrate capable of curing to give rubber-like elastic objects, such as that mentioned above, is plasticized and mixed with high heat-conductivity fibers, such as those mentioned above, in such a manner that the fibers are uniformly dispersed in the substrate. This plasticizing and mixing step may be effected, for example, using mixers such as mixing rolls, internal mixers, or kneaders.

After having been thus mixed and plasticized, the resulting mixture is then so processed that the high heat-conductivity fibers uniformly dispersed therein are oriented.

For the orientation, for example, the plastic mixture is sheared by the use of a screw pump, a gear pump, a plunger pump or the like, whereby the mixture undergoes plastic deformation in a predetermined direction. This orientation may also be effected by the use of ordinary working devices for synthetic resin and synthetic rubber, for example, by the use of extruders, injection molding machines, calender molding machines, etc.

For effectively shearing for orienting the fibers, the silicone rubber composition mixed and kneaded in the previous step may be passed and extruded through a large number of parallel pipes each having a diameter of from 0.1 to 10 times the fiber length under differential pressure.

In the thus-shaped, rubber-like elastic objects of the silicone rubber composite, the high heat-conductivity fibers are oriented nearly in parallel with the direction of flow axis of the composite.

As being insufficiently cured and crosslinked, the silicone rubber composite obtained is further cured. The curing method may be any desired one. For example, the composite may be cured under heating at a temperature of from 180°C to 300°C. More concretely, it may be cured under heating at a temperature of from 200 to 260°C for 10 minutes or so.

In this invention, the high heat-conductivity silicone rubber composite may be sliced to give silicone rubber sheets favorable for heat radiation.

To obtain silicone rubber sheets having high heat conductivity in the intended thicknesswise direction, it is desirable that a large number of the high heat-conductivity fibers are oriented in the thicknesswise direction of each sheet. In one example for this, the high heat-conductivity silicone resin composite obtained may be sliced into sheets having a desired thickness along the plane substantially vertical to the direction of orientation of the high heat-conductivity fibers in the composite, that is, vertical to the shearing direction in the pipes through which the composite was sheared. The silicone resin composite may be heated or cooled during slicing.

In the high heat-conductivity silicone rubber sheet of this invention, which is obtained by sheeting the high heat-conductivity silicone rubber composition, a number of high heat-conductivity fibers run through the sheet. In the sheet as produced according to the shearing method mentioned above, a part of the fibers are embedded in the sheet without running therethrough. The proportion of the non-running-through fibers to all fibers in the sheet depends on the length of the fibers, the thickness of the sheet and the temperature at which the composite is sliced into the sheet.

Preferably, in the silicone rubber sheet of this invention, the high heat-conductivity fibers are oriented in the direction parallel to the thicknesswise direction of the sheet. Where the sheet is so cut that the fibers oriented therein in one direction through shearing or the like can be accurately vertical to the in-plane direction of the sheet, it becomes so excessively hard as to cause an increase in rubber hardness. Thus, the compatibility of the sheet with rough surfaces is worsened and the adhesiveness thereof to heat-generative units or heat-radiative units is lowered, thus causing thermal resistance. Therefore, when the high heat-conductivity silicone rubber composite in which the fibers are oriented in one direction is formed into sheets, it is desirable that the sheeted composite is sliced along the plane that is inclined in some degree relative to the vertical direction of the fiber axis. In the silicone rubber sheet thus sliced in that manner, the fibers are oriented nearly vertically but obliquely in some degree to the plane of the sheet. As a result, the adhesiveness of the sheet to heat-generative units and heat-radiative units and also the flexibility of the sheet are increased without varying the fiber content of the sheet. It is desirable that the angle at which the sheet is sliced is shifted obliquely by approximately from 0 to 10 or so relative to the vertical direction of the fiber axis, though it depends on the length of the fibers and the thickness of the sheet, since the fibers must run through the sheet.

When the silicone rubber sheet of this invention is so deformed as to have a reduced thickness, the non-running-through, high heat-conductivity fibers that exist in the sheet are made to run through the sheet one after another and brought into contact with both the heat-generative surface and the heat-radiative surface of the units as disposed to sandwich the sheet therebetween. In that case, the quantity of heat to be transferred by the high heat-conductivity fibers which constitute the essential heat-conductive component in the silicone rubber sheet of this invention is greatly increased. For these reasons, therefore, it is desirable that the silicone rubber sheet of this invention is deformed by pressing in the out-of-plane direction or stretching in the in-plane direction to reduce its thickness before it is used.

As mentioned hereinabove, the heat conductivity of the high heat-conductivity silicone rubber sheet according to this invention, having anisotropic heat conductivity, is generally from 0.3 to 850 W/m·K, preferably from 0.5 to 560 W/m·K, more preferably from 3 to 560 W/m·K, even more preferably between 4 and 560 W/m·K, in the out-of-plane direction of the sheet. The heat conductivity of the high heat-conductivity silicone rubber sheet in the in-plane direction is generally from 0.15 to 1.5 W/m·K, when it is constant. In this case, it is especially desirable that the ratio of the heat conductivity in the out-of-plane direction to that in the in-plane direction is generally from 2 to 5500, more preferably from 10 to 3500, in order that the silicone rubber sheet could be used for anisotropic heat conduction.

On the other hand, the heat conductivity of the high heat-conductivity silicone rubber sheet of this invention may be generally from 0.15 to 450 W/m·K, preferably from 0.15 to 250 W/m·K in the in-plane direction, when the heat conductivity in the in-plane direction is anisotropic and is not constant. In this case, it is especially desirable that the ratio of the heat conductivity in the out-of-plane direction to that in the in-plane direction is generally from 1 to 5500, more preferably from 1 to 3500, in order that the high heat-conductivity silicone rubber sheet could be used for anisotropic heat conduction.

The silicone rubber composite to be obtained in this invention may be generally from 1 to 100, preferably from 5 to 50 in the hardness, in terms of Asker C hardness. The Asker C hardness as referred to herein is one to be measured by the use of a spring-type hardness tester, Asker C Model according to SRIS 0101 (Society of Rubber Industry, Japan, Standard) or JIS S6050. Silicone rubber composites having a hardness of smaller than 1 are unfavorable as they are too soft, while those having a hardness of larger than 100 are also unfavorable as their adhesiveness to other units such as heat-generative units or heat-radiative units is poor.

When heat-generative units and heat-radiative units are connected with the silicone rubber composite or the silicone rubber sheet of this invention, pressure-sensitive adhesives may be used. Although the components for the adhesives are not particularly limited, preferred are silicone-base pressure-sensitive adhesives which may optionally contain additives such as curing agents.

This invention is described concretely with reference to the following Examples, which, however, are not intended to restrict the scope of this invention.

### [Example 1]

A silicone gel substrate (trade name: TSE3070) from Toshiba Silicone Co. was mixed with a heat-conductive filler composed of 150 % by weight, relative to the substrate, of pitch-base carbon fibers A having a heat conductivity of about 600 W/m·K and a length of about 100 µm and 1 % by weight, relative to the substrate, of curly pitch-base carbon fibers B having a heat conductivity of about 20 W/m·K and a length of 3 mm, and was fully stirred to thereby obtain a mixture. The resulting mixture was cast into a Teflon resin container having a size of 200 × 200 × 20 mm up to a height of about 2 mm, defoamed and cured to give a silicone rubber composition. The resulting composition was taken out of the container to obtain a silicone rubber sheet having a thickness of about 2 mm. The heat conductivity of the sheet was measured to be 4.46 W/m·K, as shown in Table 1. The sheet obtained herein was a high heat-conductivity silicone rubber sheet having excellent heat conductivity.

### [Examples 2-10 and Comparative examples 1-2]

Each silicone rubber sheet was prepared by the same method as in Example 1 except for that carbon fibers A and carbon fibers B as shown in Table 1 were used instead of those used in Example 1.

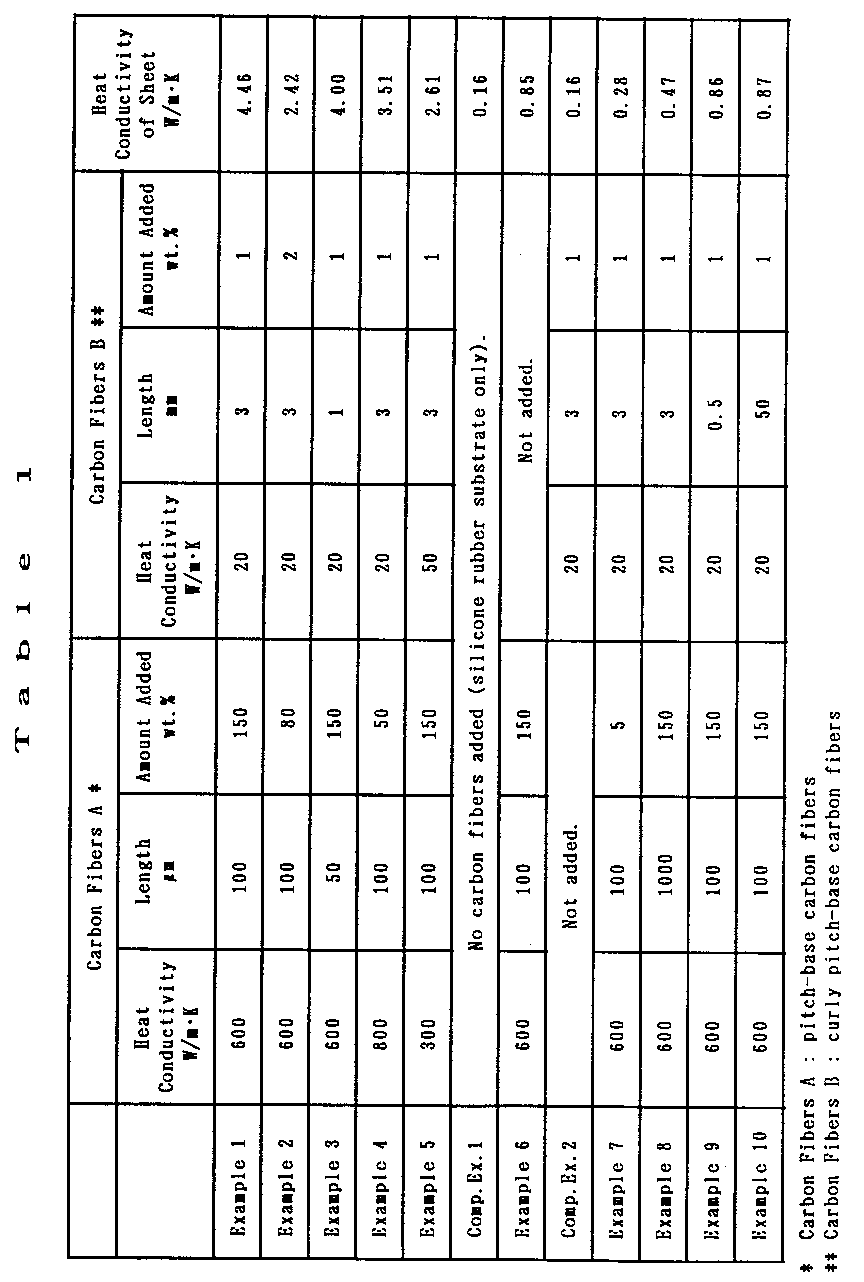

As shown in Table 1, each high heat-conductivity silicone rubber sheet obtained in Examples 2-5 exhibits excellent heat conductivity. On the other hand, each high heat-conductivity silicone rubber sheet obtained in Comparative examples 1, 2 and Examples 6-10 does not exhibit excellent heat conductivity.

### [Example 11]

Graphitized pitch-base carbon fibers having a heat conductivity of about 600 W/m·K (prepared by heating pitch-base carbon fibers having a heat conductivity of about 50 W/m·K in an Ar atmosphere at 3000°C) were, after having been cut to have a length of about 95 mm, charged into a Teflon resin container having a size of 100 × 100 × 100 mm to have a volume content of 45 % in the container, while being aligned in one direction. Next, a silicone rubber substrate having a viscosity of 0.7 Pa·s before curing was cast into the container up to a height of 90 mm, defoamed and cured to obtain a carbon fiber-reinforced silicone rubber composite. This silicone rubber composite had a final fiber volume content of 50 %. The resulting silicone rubber composite was taken out of the container and sliced in the direction vertical to the oriented carbon fibers to prepare a sheet having a thickness of 3 mm as shown in Fig. 2, thus obtaining a high heat-conductivity silicone rubber sheet.

The heat conductivity of the sheet was measured in both the out-of-plane direction and the in-plane direction to find out that the heat conductivity of the sheet in the out-of-plane direction was 260 W/m·K. while that in the in-plane direction was 0.20 W/m·K, and the ratio of the heat conductivity in the out-of-plane direction to that in the in-plane direction was about 1300. The sheet was a good carbon fiber-reinforced, anisotropic, high heat-conductivity silicone rubber sheet having excellent heat conductivity in the specific direction.

The heat conductivity of all samples obtained in Examples was measured in a laser flash method according to JIS R1611.

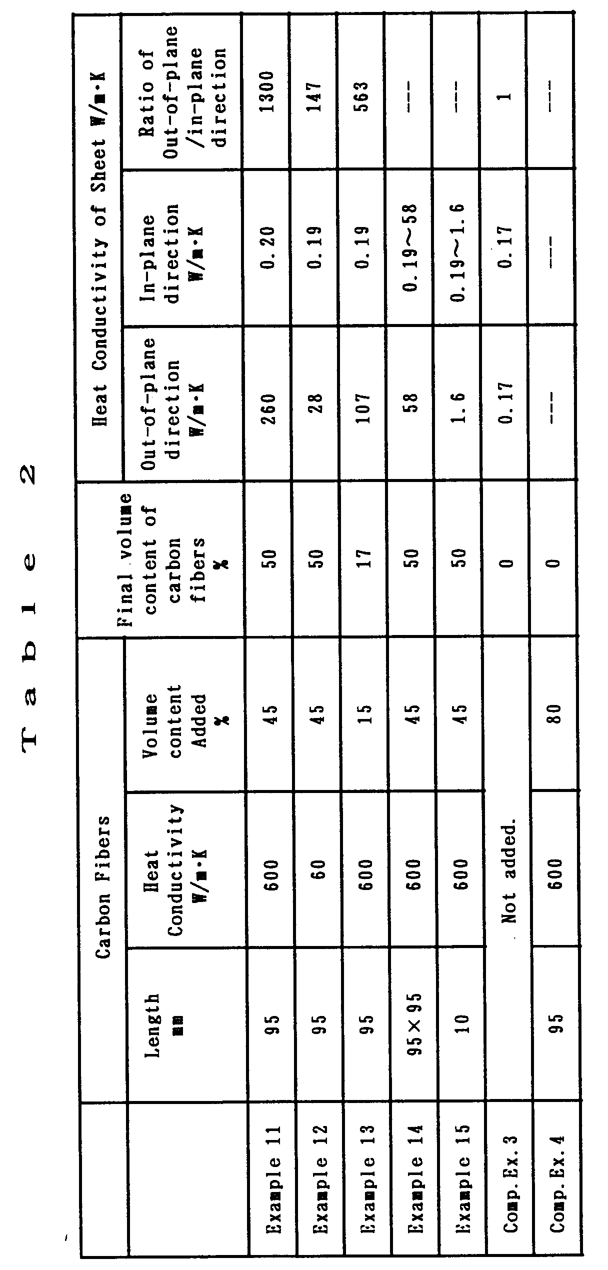

### [Example 12]

A silicone rubber sheet was prepared by the same method as in Example 11 except for that carbonized pitch-base carbon fibers having a heat conductivity of about 60 W/m·K (prepared by heating pitch-base carbon fibers having a heat conductivity of about 50 W/m·K in an Ar atmosphere at 3000°C) were used as carbon fibers. The heat conductivity of the sheet is shown in Table 2. The sheet was a good carbon fiber-reinforced, anisotropic, high heat-conductivity silicone rubber sheet having excellent heat conductivity in the specific direction.

### [Example 13]

A high heat conductivity silicone rubber sheet was prepared by the same method as in Example 1 except for that the same graphitized pitch-base carbon fibers were charged into the Teflon resin container to have a volume content of 15 % in the container. The heat conductivity of the sheet is shown in Table 2. The sheet was a good carbon fiber-reinforced, anisotropic. high heat-conductivity silicone rubber sheet having excellent heat conductivity in the specific direction, wherein the ratio of the heat conductivity in the out-of-plane direction to that in the in-plane direction was 563.

### [Example 14]

Plain fabrics of the same graphitized pitch-base carbon fibers as in Example 11 were previously cut to have a size of 95 × 95 mm and laminated in a Teflon resin container having a size of 100 × 100 × 100 mm to have a volume content of 45 % in the container. Next, a silicone rubber substrate having a viscosity of 0.7 Pa·s before curing was cast into the container up to a height of 90 mm, defoamed and cured to obtain a carbon fiber-reinforced silicone rubber composite. This silicone rubber composite had a final fiber volume content of 50 %. The resulting silicone rubber composite was taken out of the container and sliced in the direction vertical to the direction of orientation of one group of the carbon fibers of those oriented in two directions to prepare a high heat-conductivity silicone rubber sheet. The heat conductivity of the sheet is shown in Table 2. The sheet was a good carbon fiber-reinforced, anisotropic, high heat-conductivity silicone rubber sheet having anisotropic heat conductivity in the out-of-plane direction and in the in-plane direction.

### [Example 15]

The same graphitized pitch-base carbon fibers as in Example 11 were previously cut to have a length of 10 mm and randomly charged into a Teflon resin container having a size of 100 × 100 × 100 mm to have a volume content of 45 % in the container. Next, a silicone rubber substrate having a viscosity of 0.7 Pa·s before curing was cast into the container up to a height of 90 mm, defoamed and cured to obtain a carbon fiber-reinforced silicone rubber composite. This silicone rubber composite had a final fiber volume content of 50 %. The resulting silicone rubber composite was taken out of the container and sliced in the direction in which the carbon fibers were laminated to prepare a high heat-conductivity silicone rubber sheet. The heat conductivity of the sheet was measured in both the out-of-plane direction and some of the in-plane directions to find out that the heat conductivity of the sheet in the out-of-plane direction was 1.6 W/m·K, while that in the in-plane directions fell between 0.19 and 1.6 W/m·K. The sheet was a good carbon fiber-reinforced, anisotropic, high heat-conductivity silicone rubber sheet having anisotropic heat conductivity in the out-of-plane direction and in the in-plane direction.

### [Comparative Example 3]

Into a Teflon resin container having a size of 100 × 100 × 100 mm, a silicone rubber substrate having a viscosity of 0.7 Pa·s before curing was cast up to a height of 90 mm, defoamed and cured to obtain a cured product of silicone rubber only. Then, the product was sliced to prepare two sheets each having the same thickness as in Example 11. The heat conductivity of the two sheets was measured to find out that the both had the same heat conductivity of 0.17 W/m·K.

### [Comparative Example 4]

A carbon fiber-reinforced silicone rubber composite was prepared by the same method as in Example 11 except for that the graphitized pitch-base carbon fibers was cast into the Teflon resin container to have a volume content of 80 % in the container. Having been taken out of the container, however, the composite could not retain it shape, because the silicone rubber substrate could not reach the bottom of the container and therefore could not well penetrate into the carbon fibers, thus forming a portion where fibers could not adhere to each other at all. As a result, it was impossible to use the composite as a carbon fiber-reinforced, anisotropic, high heat-conductivity silicone rubber sheet.

### [Example 16]

A silicone rubber substrate having a viscosity of 0.7 Pa·s before curing was mixed with 7 % by weight. relative to the substrate, of a heat-conductive filler of pitch-base carbon fibers having a heat conductivity of about 650 W/m·K and a length of about 3 mm (prepared by heating pitch-base carbon fibers having a heat conductivity of about 50 W/m·K and a length of about 3 mm in an inert atmosphere at 3000°C for 2 hours) to thereby prepare a mixture, and the mixture was well stirred and dispersed by the use of a mixing roll. Then, the resulting mixture was stressed in an extruder for plastic deformation in one direction and extruded, while orienting the fibers monoaxially, to obtain a silicone rubber molding. The resulting silicone rubber molding having a size of 200 × 100 × 300 was cured (at 250°C for 10 minutes) and sliced into a sheet along the plane vertical to the oriented fibers, thereby obtaining a silicone rubber sheet having a thickness of 0.3 mm, in which the fibers were oriented in the thicknesswise direction. The heat conductivity of the rubber sheet in the out-of-plane direction was measured according to laser flashing to find out that it was 15 W/m·K.

### [Example 17]

The silicone rubber molding prepared in Example 16 was cured (at 250°C for 10 minutes) and then sliced into a sheet along the plane vertical to the oriented fibers, thereby obtaining a silicone rubber sheet having a thickness of 3.0 mm, in which the fibers were oriented in the thicknesswise direction. The heat conductivity of the rubber sheet in the out-of-plane direction was measured according to laser flashing to find out that it was 2.4 W/m·K.

### [Example 18]

The same silicone rubber substrate as in Example 16 was mixed with 13 % by weight, relative to the substrate, of a heat-conductive filler of pitch-base carbon fibers having a heat conductivity of about 650 W/m·K and a length of about 3 mm (prepared by heating pitch-base carbon fibers having a heat conductivity of about 50 W/m·K and a length of about 3 mm in an inert atmosphere at 3000°C for 2 hours) to prepare a mixture, and the mixture was well stirred and dispersed by the use of a mixing roll. Then, the resulting mixture was stressed through an extruder for plastic deformation in a one direction and extruded, while orienting the fibers monoaxially, to obtain a silicone rubber molding. The resulting silicone rubber molding having a size of 200 × 100 × 300 was cured (at 250°C for 10 minutes) and sliced into a sheet along the plane vertical to the oriented fibers, thereby obtaining a silicone rubber sheet having a thickness of 0.3 mm, in which the fibers were oriented in the thicknesswise direction. The heat conductivity of the rubber sheet in the out-of-plane direction was measured according to laser flashing to find out that it was 20 W/m·K.

### [Example 19]

The silicone rubber molding prepared in Example 18 was cured (at 250°C for 10 minutes) and then sliced into a sheet along the plane vertical to the oriented fibers, thereby obtaining a silicone rubber sheet having a thickness of 3.0 mm, in which the fibers were oriented in the thicknesswise direction. The heat conductivity of the rubber sheet in the out-of-plane direction was measured according to laser flashing to find out that it was 5.0 W/m·K.

### [Example 20]

Both surfaces of the silicone rubber sheet having a thickness of about 2 mm and prepared by the same method as in Example 19 were coated with a mixture prepared by mixing 100 parts by weight of a silicone adhesive and 4 parts by weight of a curing agent to form a layer of 20 µm thick on each surface, then heated at 230°C for 30 minutes and thereafter cooled, thereby obtaining an adhesive silicone rubber sheet. The heat conductivity of the adhesive rubber sheet in the out-of-plane direction was measured according to laser flashing to find out that it was 4.9 W/m·K. There was scarcely any difference between the data obtained herein and in Example 19.

### [Comparative Example 5]

The same silicone rubber substrate as in Example 16 was directly molded by itself through an extruder. The resulting silicone rubber molding having a size of 200 × 100 × 300 was cured (at 250°C for 10 minutes) and sliced to obtain a silicone rubber sheet having a thickness of 0.3 mm. The heat conductivity of this rubber sheet was measured according to laser flashing to find out that it was 0.16 W/m·K.

### EFFECTS OF THE INVENTION

This invention can provide a high heat-conductivity silicone rubber composition having excellent heat conductivity and radiativity and good tackiness and adhesiveness.

Further this invention permits the production of a fiber-reinforced, anisotropic, high heat-conductivity silicone rubber composite having excellent heat conductivity and radiativity, especially having high heat conductivity rind radiativity in a specific direction and good tackiness and adhesiveness.

## Claims

1. A high heat-conductivity silicone rubber composition comprising a silicone rubber substrate and carbon fibers having a length of from 0.005 to 100 mm.

2. A silicone rubber composite which comprises 1-70 % of high heat-conductivity fibers in terms of the fiber volume content having a heat conductivity of from 60 to 1200 W/m·k and a silicone rubber substrate, wherein at least a part of said high heat-conductivity fibers are oriented in one direction or in a two-dimensional direction.

3. A silicone rubber composite according to claim 2, wherein the length of the high heat-conductivity fibers is from 10 to 700 µm.

4. A silicone rubber composite according to claim 2, wherein the high heat-conductivity fibers include at least one member selected from the group consisting of silicon carbide fibers, pitch-base carbon fibers, polyacrylonitrile-base carbon fibers and rayon-base carbon fibers.

5. A silicone rubber composite according to claim 2, wherein the silicone rubber composite is in the shape of a sheet rind at least a part of the high heat-conductivity fibers is so oriented as to constitute an out-of-plane directional component relative to the sheet whereby at least a part of the high heat-conductivity fibers pass through the sheet.

6. A silicone rubber composite according to claim 5, wherein the sheet has a thickness of from 0.05 to 10 mm.

7. A silicone rubber composite according to claim 5, wherein the sheet has a heat conductivity of from 0.3 to 850 W/m·K in the out-of-plane direction of the sheet.

8. A silicone rubber composite according to claim 5, wherein the ratio of the heat conductivity in the out-of-plane direction to that in the in-plane direction is from 2 to 5500.

9. A heat-conductive device comprising a heat-generative unit and a heat-radiative unit connected with each other via a silicone rubber composite, wherein the silicone rubber composite comprises 1-70 % of high heat-conductivity fibers in terms of the fiber volume content having a heat conductivity of from 60 to 1200 W/m·k and a silicone rubber substrate, and at least a part of said high heat-conductivity fibers is oriented in one direction or in a two-dimensional direction.

10. A heat-conductive device according to claim 9, wherein the heat-generative unit is connected with one surface of the sheet and the heat-radiative unit with the other surface of the sheet.
